# EUROPEAN PATENT APPLICATION

(11) **EP 2 085 922 A1**
(43) Date of publication of application: **05.08.2009**
(21) Application number: 09000035.7
(22) Date of filing: 05.01.2009
(51) Int. Cl.: G06Q 30/00

(54) **Method and system for aiding consumer in identification of contents and ingredients**

(30) Priority: 02.01.2008 IL 18853908
(71) Applicant: Tempo Capital, West Newton MA 02465 (US)
(72) Inventor: Zerdoun, Joëlle, 94000 Créteil (FR)
(74) Representative: Plaçais, Jean Yves

(57) **Abstract**

In embodiments of the present invention, improved capabilities are described for providing content information for a plurality of products, and specifically consumer products. A method and system is provided for updating a data repository 102 based on information corresponding to each of the products. A user defined search criteria for information pertaining to the plurality of products is processed in and/or from a portable electronic device 104a. The method and system provide a customizable search output 210, wherein the customizable search output indicates the content information for the plurality of products. Further, the information corresponding to each of the one or more products is provided by a plurality of entities.

## Description

### CROSS-REFERENCE TO RELATED APPLICATIONS

This application claims the benefit of the following foreign application, which is hereby incorporated by reference in its entirety: Israel (IS) patent application no. 188539 filed January 02, 2008.

### BACKGROUND

Field:

The invention herein disclosed generally refers to contents of products, and specifically to detection of ingredients and contents of various consumer products.

Description of the Related Art:

Transparency pertaining to ingredients and contents of products has been the foremost requirement and demand by the consumer base worldwide. This requirement and desire may be driven by a variety of factors such as health, religious, and/or dietary needs. For example, food restrictions may be observed due to medical conditions such as in the case of celiac, diabetes, and allergies. Similarly, religious preferences may mandate restrictions such as kosher, hallal, eggless, and beef-less food products. Consciousness about food ingredients may also stem from fitness needs such as those guided by certain diet plans (such as trans-fats, nutrients, and folic acid intake in the daily routine) or from personal choices for individuals electing to be vegetarian or vegan.

Conventional systems that provide ingredient lists to consumers such as websites offering a list of products containing the restricted dietary ingredients are well-known. Consulting these lists while shopping for various requirements may be inconvenient for consumers in some cases and may require them to refer to an unmanageable amount of data. Other similar systems provide a self defined list of product ingredients that can be downloaded and referred to during 'shopping'.

Similarly, contents and ingredients of non-food products may also be revealed to the consumer who may need the information to satisfy/adhere to health, religious, and/or dietary needs. The non-food products may include soaps, house cleaning products, detergents, medicines, rubber, textiles, toys, room-fresheners, cosmetics, tattoos, leather, and some other types of consumer products. For example, a user may be allergic to metals such as nickel and copper, generally used in fashion accessories. As another example, restrictions may be observed in the use of fragrance-based cosmetic products, due to certain medical conditions such as 'asthma' and certain chemicals may induce 'eczema'. Similarly, individuals may be allergic to medicines containing non-steroidal anti-inflammatory drugs such as ibuprofen™. Other individuals may be allergic to aspirin™.

Consumers such as children, the elderly, and specific ethnic groups may also find it difficult to match the self defined list to the ingredient information provided on the labels of consumer products. Moreover, identification of the product contents may not be feasible in real time since these conventional systems mostly rely on the consumer's effort in indicating criteria and obtaining a downloaded list of products. Further, they also do not involve an end-to-end interaction between the manufacturers/distributors/supermarkets and the consumers.

In light of the above discussion, there is a need for a method and system that may be modular in design, applicable in real time, efficient, and easy to use by any type of consumer, including children, the elderly, and specific ethnic groups. In addition, there is a need for a method and system that may actively engage entities that manufacture or distribute products with the end consumers.

### SUMMARY

Various embodiments of the present invention disclose a real time and easy to use method and system for identifying ingredients/contents of diverse consumer products.

In an aspect, the present invention offers a consumer aiding system comprising :
- a data repository host having a first communication interface,
- said data repository host being adapted to maintain and update product-related information, comprising a plurality of product designations and product content identifying data for each product designation,
- said data repository host being further adapted to process search requests to deliver corresponding request results comprising product related information,
- a personal electronic equipment having an input/output user interface, and having a second communication interface adapted for interacting with said first communication interface, said equipment enabling a consumer to establish one or more user defined search requests and to view corresponding customizable requests results comprising product content information for one or more products,
- at least one of the search requests having at least one search argument related to product content identifying data, with the search request tending to the absence of a substance derived from said at least one search argument.

In another aspect, the present invention offers a consumer aiding method, comprising the steps of :
a. in a data repository, maintaining an updated storage of product related information, comprising a plurality of product designations, and a plurality of corresponding content-identifying data, wherein the information is provided by a plurality of entities;
b. receiving a user defined search criteria for information pertaining to the plurality of products; and
c. providing a customizable search output, wherein the customizable search output indicates the content information for the plurality of products.

In another aspect of the present invention, a method and system may be disclosed for providing content information for a plurality of products. The method may comprise updating a data repository based on information corresponding to each of the one or more products, receiving a user defined search criteria for information pertaining to the plurality of products, and providing a customizable search output. The customizable search output may indicate the content information for the plurality of products. The customizable search output may include visual indication, auditory indication, and some other ways for presenting and customizing the search output. Further, the information corresponding to each of the one or more products may be provided by a plurality of entities such as manufacturers, distributors, shopkeepers, pharmacists, medical practitioners, governmental authorizing bodies, and third parties.

In an embodiment, the information corresponding to each of the one or more products may be associated with one or more predetermined subjects in the data repository. The predetermined subjects may be barcode numbers.

In an embodiment, the data repository may be automatically updated.

In another embodiment, the data repository may be manually updated.

The method may further comprise comparing the received user defined search criteria with the updated data repository.

In embodiments, the user defined search criteria may be one or more keywords or their combination. These keywords may include dietary restriction, medical condition, religious preference, and some other types of keywords. In embodiments, the user defined search criteria may include a barcode.

In an aspect of the present invention, a method and system of generating content information for one or more products is provided. The method may comprise forwarding a user defined search input to a data repository and presenting a customizable search output corresponding to the content information for the one or more products. The data repository may be updated based on information corresponding to the one or more products provided by a plurality of entities.

In embodiments, the method may further comprise sending a plurality of responses to the data repository based on the presented customizable search output. This may subsequently initiate an action in the data repository.

In embodiments, the action may include updating the data repository.

In other embodiments, the action may include generating a request for a new search input.

In embodiments, the action may include generating a survey form.

In an aspect of the present invention, a system for providing content information for one or more products may be disclosed. The system may include one or more devices (comprising and/or defining personal electronic equipment) for receiving one or more user defined search inputs and viewing customizable search outputs and a data repository communicating with the one or more devices for processing the search inputs. The data repository may be updated based on information provided by a plurality of entities.

Further, each of the one or more devices and the data repository may be associated with a data network.

In an embodiment, the one or more devices may comprise the data repository.

In embodiments, the one or more devices may comprise a search input facility for receiving and forwarding the one or more user defined search inputs and a search output facility for presenting a customizable search output. The one or more devices may be scanners, PDAs, mobile, smart phones, and some other types of wireless devices.

In an embodiment, the system may further comprise a user interface such as a projector.

In another embodiment, the system may further comprise an entity interface.

In an aspect of the present invention, a computer program product having program instructions stored thereon, configured to execute encoded instructions by a processor may be disclosed. The said instructions may provide the steps of updating a data repository based on information corresponding to each of one or more products, receiving a user defined search criteria for information pertaining to a plurality of products, and providing a customizable search output. The information corresponding to each of one or more products may be provided by a plurality of entities.

In an aspect of the present invention, a method and system for obtaining content information for one or more products may be provided. The method may comprise selecting a first mode for inputting a user defined search criteria and selecting a second mode for displaying a search output. The search output may indicate the content information received from a data repository, being updated based on information provided by a plurality of entities.

In embodiments, the first mode may include a scanner, keyboard, voice receptor, and some other types of modes.

In embodiments, the second mode may include a visual display, auditory signal, print out of the search output, and some other types of modes.

Embodiments of the present invention disclose methods and systems that may save resources in terms of reading/scanning numerous product labels which are sometimes descriptive beyond need and/or are also illegible due to small size or language constraints. In some instances, the ingredients of the products may be listed inside the 'packaging', as in case of medicines. Therefore, it may be difficult to quickly and/or without opening the 'packaging' identify the ingredients or potential allergens.

Embodiments of the present invention disclose methods and systems that may help manufacturers in promotion of sales, brand positioning, and receiving direct feedback/customers' response and preferences.

Embodiments of the present invention disclose methods and systems that may enable handling an unmanageable amount of information regarding the consumer products.

Embodiments of the present invention disclose methods and systems that may facilitate obtaining real time content information.

Embodiments of the present invention disclose methods and systems that may provide end-to-end interaction among the consumers and the plurality of entities.

These and other systems, methods, objects, features, and advantages of the present invention will be apparent to those skilled in the art from the following detailed description of the preferred embodiment and the drawings. All documents mentioned herein are hereby incorporated in their entirety by reference.

### BRIEF DESCRIPTION OF THE FIGURES

The invention and the following detailed description of certain embodiments thereof may be understood by reference to the following figures:

Fig. 1 depicts an exemplary environment where various embodiments of the present invention may be implemented;

Fig. 2 depicts a device for scanning the products, in accordance with an embodiment of the present invention;

Fig. 3 depicts an interface for accessing a data repository, in accordance with an embodiment of the present invention;

Fig. 4 depicts scanning of products, in accordance with an embodiment of the present invention;

Fig. 5 depicts the process of downloading a product list to a device to scan the products; and

Fig. 6 depicts a flow diagram for providing content-based information for a plurality of products, in accordance with an embodiment of the present invention.

### DETAILED DESCRIPTION

While the specification concludes with the claims defining the features of the invention that are regarded as novel, it is believed that the invention will be better understood from a consideration of the following description in conjunction with the drawings/figures, in which like reference numerals are carried forward.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting but rather to provide an understandable description of the invention.

The terms "a" or "an", as used herein, are defined as one or more than one. The term "another", as used herein, is defined as at least a second or more. The terms "including" and/or "having" as used herein, are defined as comprising (i.e. open transition). The term "associated" as used herein, is defined as connected or linked, although not necessarily directly, and not necessarily mechanically. The terms user, consumer, person, individual, and shopper; items and products; ingredients and contents have been used interchangeably throughput the description

The information regarding ingredients of a product, and specifically consumer items (food and/or non-food), has been a primary consideration for both consumers and entities that are involved in their production and distribution. The factors behind this thought may be religious, health, and/or dietary considerations.

In an example, individuals, religions and/or cultures may practice certain specific food preferences. In some cases, certain food categories may be entirely considered as restricted/taboo/prohibited. For example, 'Kosher' foods are subscribed by Judaism and 'Halal' foods by Islam. In addition, latest diet trends such as 'Atkins' may also be followed by some individuals. According to dietary restrictions set forth by Judaism, a food or food based product will not be considered 'Kosher', if it is derived from non-kosher animals (such as animals with cloven hooves, goats, and cattle) or from animals that were not slaughtered in the prescribed manner, a mixture of meat and milk, wine or grape juice (or their derivatives) produced by gentiles, or even the use of cooking utensils and machinery which had previously been used for non-kosher food. Similarly, based on Islamic rules, for food to be considered 'Halal', it must not be a forbidden substance and any meat must have been derived from an animal slaughtered according to traditional guidelines. Example of a 'non Halal' food may include pork meat.

People may also practice food restrictions guided by certain diet plans. For example, intake of trans-fats and nutrients in the daily routine, consumption of folic acid for development of blood cells in pregnant women, or consumption of iron rich diet in anaemic conditions.

In yet other instances, individuals may practice specific food preferences that may not be solely dependent on a single factor, but may be channeled by a combination of parameters. For example, an individual may prefer animal based products (such as milk and milk powder), but may not prefer eggs, which is another example of an animal based product.

As another example, a person may prefer food products based on root-vegetables except for those with bulbs (e.g. onion and garlic). Therefore, it may be challenging to obtain ingredient information for food products that meet such user specific/user defined preferences, which are generally a combination of a variety of criteria.

In addition, a person may also decide to follow a vegan and/or vegetarian regimen. Therefore, a vegetarian may prefer a diet that excludes meat, sea-food, and poultry, but may consume dairy products. On the other hand, a vegan apart from the restrictions for meat, sea-food, and poultry, may not prefer dairy products, and/or honey as well.

Health related factors may be primarily guided by medical conditions such as an allergy to specific ingredients. Food allergens may include corn, gluten, shellfish, peanuts, soy, and some other types of food allergens. As an example, people diagnosed with 'Celiac' may be sensitive to protein gluten. Similarly, a person with deficiency of enzyme lactose will refrain from products containing protein lactose and those with diabetes may avoid consumption of high levels of sugar.

Allergies or reactions may also be triggered by ingredients such as chemicals, fragrances, dyes, and/or herbal essences present in non-edible consumer products, e.g., soaps, detergents, medicines, house cleaning products, rubber, textiles, toys, room-fresheners, jewellery, cosmetics, tattoos, leather, and some other types of consumer products. Examples of non-food allergens may include metals (nickel in jewellery, piercing, and fashion accessories), fragrances (perfumes, shampoos, creams, shower gels, toothpastes, textile, and toys), essences ('Peru balsam' in cosmetics), chemicals (Chromium/Potassium Dichromate in leather, Colophonium in glues, Methyl Dibromo-glutaronitrile in cosmetics and gels, p-Phenylene Diamine in tattoos, Thiurames in repellants, turpentine oil in shoe polishes, and formaldehyde resins in cosmetics and textile), and some other types of non-food allergens.

Specifically, in case of medications, the allergic reactions may be common and severe. In addition, the types of allergic reactions may vary among people. Therefore, a diligent identification of the ingredients of medications may become of the essence. Examples of the medicines that may cause allergy include 'Angiotensin-Converting Enzyme' (ACE) inhibitors (used in treatment of hypertension and heart failure), antibiotics (e.g. penicillin), seizure medicines, enzymes, chemotherapy medicines, 'non-steroidal anti-inflammatory drugs (NSAIDs), vaccines, antiviral medicines, immune-globins, and some other types of medications.

In embodiments, the medications may be in form of pills/tablets, powders, liquids, topical (rubbed onto skin as pastes, ointments, and lotions), inhalers (nasal sprays), and some other forms of medications.

A consumer may also be particular about the type of colorings (food and/or non-food) such as dyes (natural and/or synthetic), preservatives, and stabilizers that are used in food preservation, physical application, and packaging. Specifically, synthetic food colorings are generally derived from fuel, tar, and/or charcoal. Therefore, these food colorings may pose certain medical threats and complications for consumers. For example, 'Erythrosine', a coal-based food dye has been known to trigger thyroid tumors. Similarly, chemical based non-food colorings such as p-Phenylene Diamine, which is frequently employed as a darkening additive in 'henna' based tattoos, may trigger severe skin reactions. Dyes used in 'X-rays' are also known to cause allergic reactions.

The present invention identifies a method and system for providing ingredient information related to various types of consumer products. Based on a user defined input/search criterion, information may be provided and displayed regarding a specific product, such as during shopping in a food outlet or in a cosmetic store. The various embodiments and features of the present invention will be apparent when described in detail below, in conjunction with appropriate examples and figures.

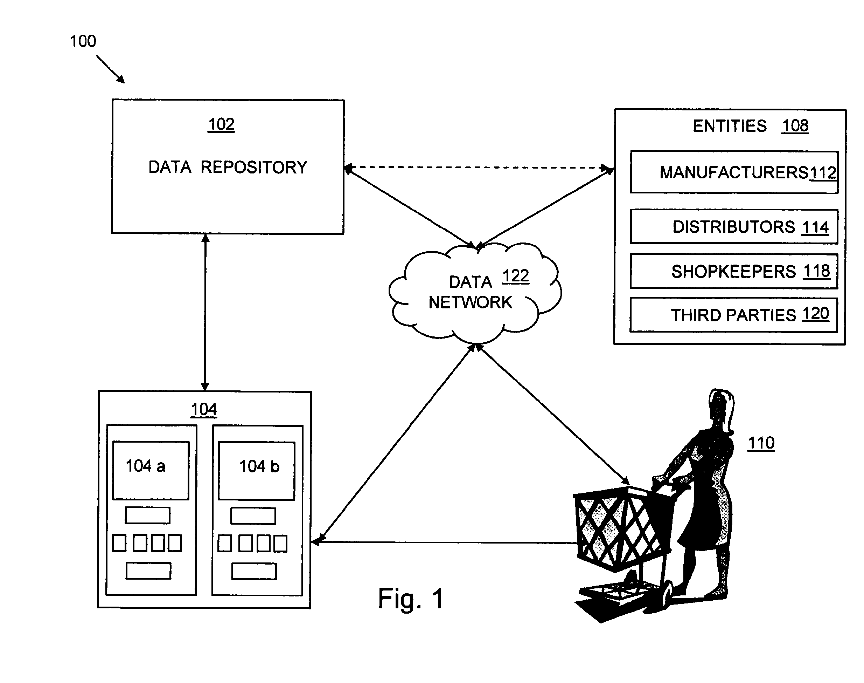

Fig. 1 depicts an exemplary environment 100 where various embodiments of the present invention may be practiced and realized. Examples of the environment 100 may include a shopping mall, a store, a food market, a commodity outlet/complex, restaurants, pharmacies, and some other types of similar environments and facilities, where consumer products may be purchased or selected by consumers/users/general public.

In embodiments, the food products may be plant and/or animal based food products. In other embodiments, the food products may be in raw, cooked, and/or processed form. The food products may also be packaged food products. Similarly, the non-food products may be packaged. In an embodiment, the non-food product may be a finished product or an unfinished or raw product such as a piece of cloth or some other product before it is dyed, processed, stitched, or undergoes any other finishing process.

As shown in Fig. 1, an exemplary environment 100 for implementing the various embodiments of the present invention may include a data repository 102, one or more devices 104, a plurality of entities 108, and consumers 110. Examples of the devices 104 may be include personal computer, laptops, cell phones, mobiles, Personal Digital Assistants (PDAs), scanners, and some other types of devices 104.

In an embodiment, the data repository 102 may be remotely located. In another embodiment, the data repository 102 may be located at a centralized server within a shop or as a console on a shopkeeper's desk.

Further, there may be various interfaces facilitating communication among various elements in the environment 100. Examples of these interfaces may include consumers' interface and entities' interface, and some other types of interfaces.

Examples of the users' and entities' interface may include a Graphical User Interface (GUI), Web based User Interface (WUI), Touch Interface, Tactile Interface, Voice User Interface, Text User Interface, and some other types of interfaces.
In an aspect of the present invention, one or more elements of the present invention may be connected by a controlling network 122 that may be a wired network such as an 'Ethernet'.

In another aspect of the present invention, the various elements may be connected by the controlling network 122 that may be a wireless network such as Wireless Local Area Network (WLAN), Wireless Personal Area Network (WPAN), Wireless Metropolitan Area Network (WMAN), mobile devices network, and some other type of wireless networks.

Further, the elements of the network 122 may be connected in various topologies such as bus, star, tree, linear, ring, mesh, hyper, and some other types of network topologies.

The plurality of entities 108 shown in the environment 100 may include manufacturers 112, distributors 114, shopkeepers 118, and third parties 120. Examples of the third parties 120 may include government authorities, auditing authorities, retailers, wholesalers, importers, exporters, and some other types of entities 108 that may be involved at one stage or the other in production, distribution, and management of various consumer products.

As shown in Fig. 1, the interaction among the various elements of the environment 100 may be in the form of a two-way communication.

For example, a customer may enter a store and may wish to identify specific pudding packets containing nuts and lactose out of the various products lined up in the food section of the store. The present invention may enable the customer to utilize the devices 104 to either scan the displayed packets or to enter a personal search criterion, such as 'pudding - nuts - lactose'. The search criteria may be provided to one of the devices 104. The search criteria from the device, say a device 104a, may be forwarded to the centralized data repository host 102 over the available communication medium. The repository 102 may contain information regarding all the food products available in the store. It may be noted that, the centralized data repository 102 may be in communication with various entities that automatically provide information/updates regarding the various products. Upon receiving the search criteria, the data repository 102 may search and compare the existing updated information regarding the various products with the received search criteria. As a next step, the data repository 102 may forward search output to the device 104a. The search output may indicate whether the selected packet meets the search criteria and/or identifying other 'relevant search results' that match the search criteria. For example, the search output may be a 'green blinking light' indicating that the selected packet does not contain nuts and is 'fit' for consumption, based on the entered search criteria 'nut-free'. In case the selected packet contains nuts, the search output may consist of a list of other products that do not contain nuts and are available in the store. Subsequently, the search output may be presented to the customer on a display on the device 104a. The customer may further customize the presented search output for personal convenience.

In an embodiment, the search output may be ingredient information for the scanned product/packet. Scanning of the product may include scanning a Universal Product Code (UPC), a National Drug Code (NDC), a barcode, reading an RFID tag, or similar other identifiers or labels. In another embodiment, the search output may be an indication regarding the matching of customer's criterion with the selected product. In another embodiment, the search output may be a list of alternatives for the selected product. In yet another embodiment, the search output may be an indication regarding non-availability of the selected product. Further, in an aspect of the present invention, the search output may be customizable. In an embodiment, the customizable search output may be a visual indication. In another embodiment, the search output may be an auditory indication. In another embodiment, the customizable search output may be a printable version of the search output.

The above aspects of customizing the search output may be best explained with an example, such that a user may select a search output mode on his device as a visual display and a printable list. Therefore, based on this customization, the search results may be displayed in the form of 'blinking LED lights'. Simultaneously, a printed copy of the search results will be generated from the device, which may later be used by the user as a reference.

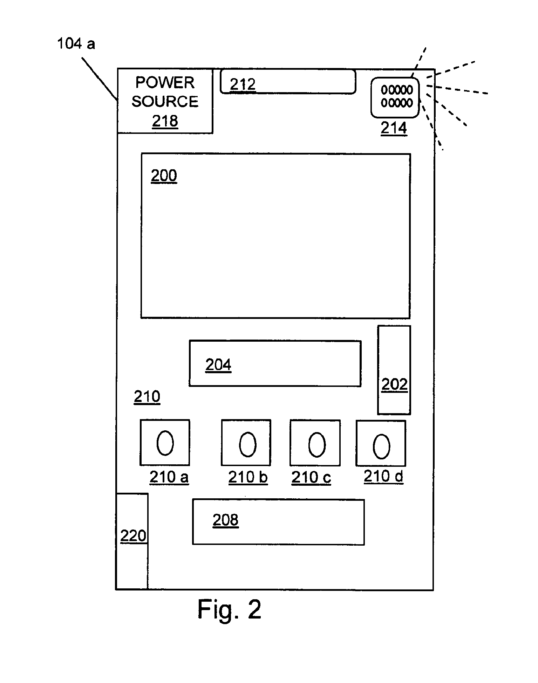

Fig. 2 depicts a device 104a out of the plurality of devices 104 that may be used for identifying ingredients of the products, in accordance with an embodiment of the present invention.

In an embodiment, the device 104a may be a scanner. In another embodiment, the device 104a may be a PDA, cell phone, mobile or smart phone, a satellite phone, and some other type of wireless device.

In an aspect of the present invention, the wireless device 104a may also be provided with scanning ability.

The device 104a may include one or more search input facilities for accepting search criteria/preferences of users such as smart card slot 202, keyboard 208, scanning unit 212, audio receptors/speakers 214, virtual keyboard provided on a screen 200, and some other types of input facilities.

The above search input facilities may enable a user defined search criteria to be provided to the device 104a. The user defined search criteria may further be helpful in obtaining content/ingredient information for a combination of preferences. For example, the consumer may indicate a search for food items containing two types of flour. As another example, the consumer may define the search criteria as a combination of 'junk jewellery - without nickel'.

The device 104a may also include one or more search output facilities such as a display screen 200, a printer slot 204, audio speakers 214, various visual signals/indicators 210, and some other types of search output facilities.

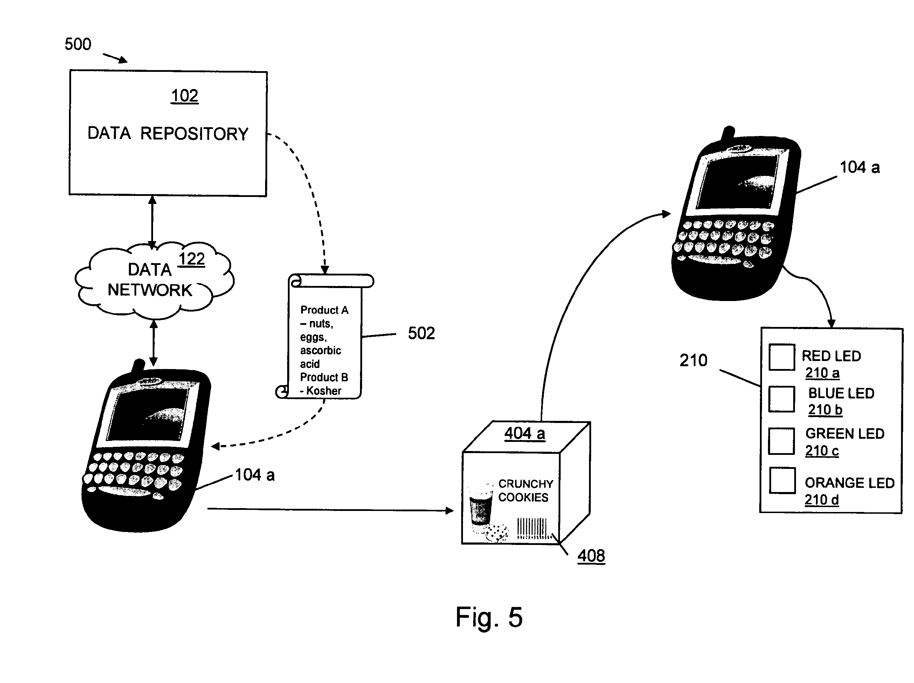

In an aspect of the present invention, the visual indicators 210 may be LED based lights. These lights may provide various indications, by means of different colored lights 210a, 210b, 210c, 210d, and similar other plurality of lights. The various exemplary indications that may be provided with these LED lights have been explained in conjunction with Fig. 5.

In embodiments, where the device 104a is a wireless device such as a mobile phone, the above described one or more search input and output facilities may be presented in combination with other functionalities of a wireless device.

In an aspect of the present invention, the display screen 200 on the device 104a may be an LCD, CRT, TFT, and some other type of screen.

Further, the device 104a may be provided with a USB hub/connector 220 such that the content information may be downloaded to a USB device connected to the device 104a, prior to visiting the retail outlet or shop. This aspect of the present invention has also been explained in conjunction with Fig. 5.

As already disclosed, the device 104a may access the data repository 102 through an interface.

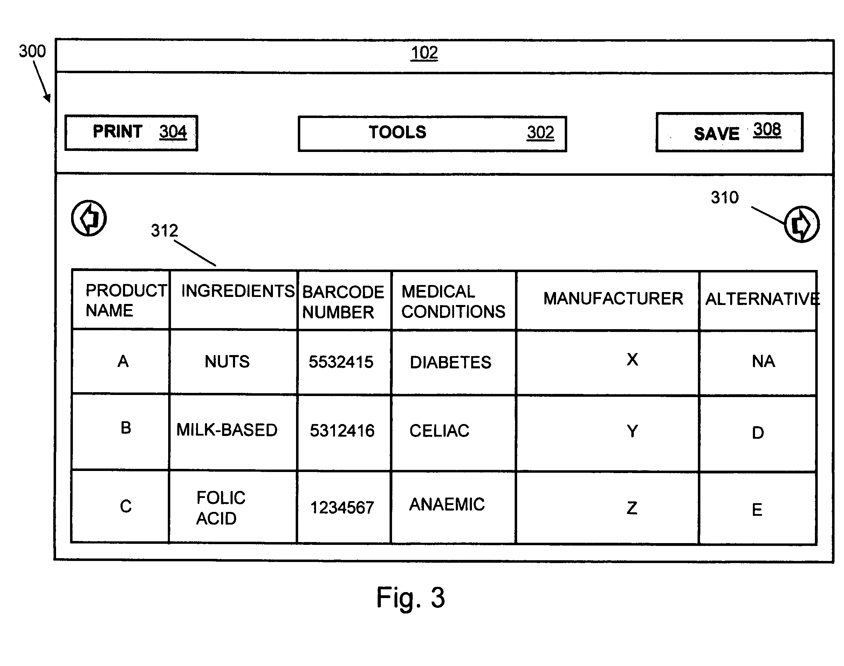

Fig. 3 depicts an interface for accessing the data repository 102, in accordance with an embodiment of the present invention.

In an embodiment, the interface 300 may be a web-based interface such as a web site offering solutions and information regarding various consumer products.

The interface 300 may host the data repository 102 along with some other tools 302.

In an aspect of the present invention, tools 302 may include modules that may facilitate various operations such as editing, selecting, printing, monitoring, calculating, predicting, simulating, processing, controlling, developing, converting, analyzing, and storing the information in the data repository 102.

Examples of tools 302 may include editing tools, drawing tools, mailing tools, filtering tools, calculation tools, grammar, dictionary/thesaurus, translation (multi-lingual), and some other types of tools that may help in manipulation and usage of the large amount of information related to the consumer products and hosted on the data repository 102.

Tools such as 'clickable' buttons for printing 304 and saving 308 the content information and navigating 'to-and-fro'/ 'back-front buttons' 310 among various web-pages may also be provided on the interface 300.

In an embodiment, the various tools 302 may be included in the data repository 102.

In an aspect of the present invention, the data repository 102 may be updated with information for a plurality of products. In embodiments, the data repository 102 may be updated automatically. In other embodiments, the data repository 102 may be updated in real time. In yet other embodiments, the data repository 102 may be updated periodically. The data repository 102 may also be updated manually where, an operator or a middle party may be responsible for manually updating it.

The information for updating the data repository 102 may be provided by the plurality of entities 108 such as the manufacturers 112, distributors 114, shopkeepers 118, and third parties 120.

The above approach for updating the data repository 102 by the plurality of entities 108 can benefit consumers and manufacturers alike. Consumers will receive the latest and updated information regarding the product contents; the convenience and efficiency of this becomes more apparent in cases where there are hundreds and thousands of brands for the same item and each brand continuously strives to float new versions and improvements related to the product. This may also save resources in terms of reading/scanning numerous product labels which are sometimes descriptive beyond need and/or are also illegible due to small size or language constraints.

Similarly, the described approach will help manufacturers in promotion of sales, brand positioning, and receiving direct feedback/customers' response and preferences.

In an aspect of the present invention, the ingredient information in the data repository 102 may be associated with one or more predetermined subjects 312. Examples of the predetermined subjects may include product/brand name, ingredients, percentage of composition, barcode number, medical conditions, religious restrictions, name of manufacturers, types of processing and packaging employed, available alternatives, additives and coloring codes, authorizing authorities (e.g. FDA), and some other types of predetermined subjects.

Associating the content information with the predetermined subjects may facilitate the generation of search outputs for a combination of the user defined search criterion. For example, product 'C' will be selected for display based on the inputted search criterion "nut free - suffering from Anemia" out of the relevant search results 'B' and 'C'. Similarly, product 'D' may be displayed as an alternative for a repellent product - without 'Thiurame' as an ingredient.

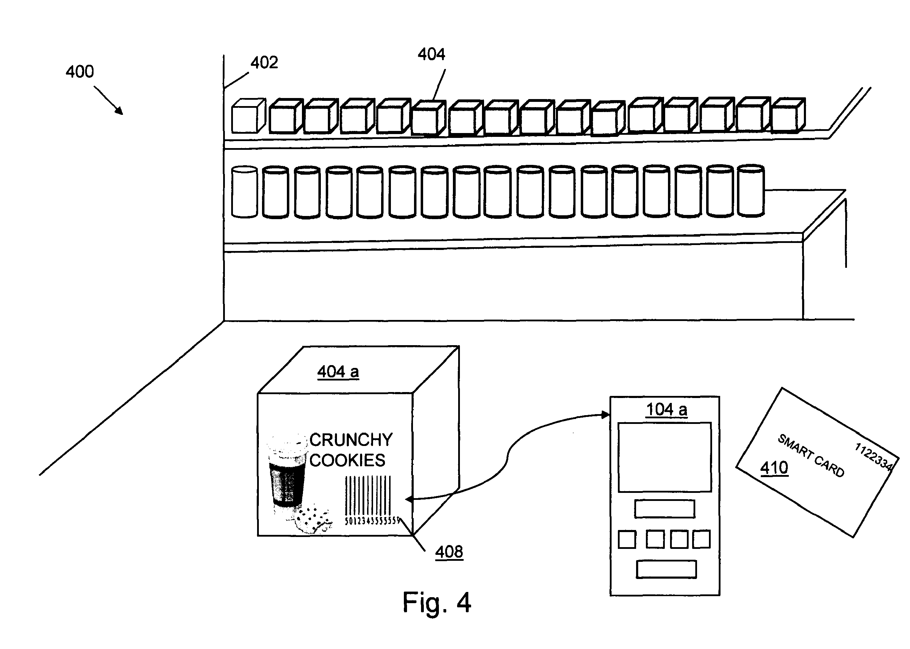

Fig. 4 depicts an exemplary scenario of environment 100 such as an area 400 in a consumer outlet or store where various products 404 may be catalogued and arranged such as in display racks 402.

In an aspect of the present invention, products 404 may be identified by various means such as with the help of barcode 408, which are unique for each of the products 404 and/or the manufacturers 112.

In another aspect of the present invention, products 404 may be identified with the help of RFID tag/labels and identifiers.

In yet another aspect of the present invention, smart cards 410 may be employed for identifying the labels of the products 404.

The device 104a from the plurality of devices 104 may be used to identify/scan the barcode 408.

As shown in Fig. 4, the consumer may use the device 104a to scan the barcode 408 and to generate the search output that may indicate the content/ingredient information for a selected food product 404a out of the plurality of products 404.

Fig. 5 illustrates another embodiment of the present invention where the content information may be downloaded 502 from the data repository 102 to a portable device 104a such as a PDA or a USB device. While shopping, the downloaded information/product list 502 in the device 104a may be used during shopping for scanning the food product 404a to obtain its content information.

In another aspect of the invention, based on the downloaded information, the consumer may input or send personal search criterion through manual search input facilities, such as keyboards to the device 104a. This search criterion may be entirely consumer defined and may facilitate in obtaining ingredient information regarding a selected product (e.g. food product 404a).

In an embodiment, the search criterion may be a keyword or a combination of keywords such as 'nut-free' and 'kosher'.

In an embodiment, the keywords may include dietary restrictions, ingredients, medical conditions, religion/religious preferences, and some other types of keywords. For example, in a pharmacy, a pharmacist may receive a prescription from a user and may utilize device 104a to input user's search criteria or keyword (specific component/allergen known to cause reaction). The device 104a may be further used to identify if the prescribed medication is 'fit' for user's consumption or not. In case, the ingredients of the prescribed medication are found to be similar to user's criteria (specified allergen), then the device 104a may present alternative medications available for user's consideration.

In other embodiments, medicines that may not require prescription from a medical practitioner may also be scanned to identify the ingredients. For example, certain painkillers (e.g. 'Dispirin') that may be purchased from stores may be scanned for their ingredients.

As shown in Fig. 5, the search output from the device 104a may be presented as visual signals 210. These indicators may also act as 'warning' signals or 'action' signals for the consumers.

For example, 'Red LED' 210a may indicate that the scanned food product 404a is not fit for consumption or the prescribed medicine contains allergens, based on the consumer defined preferences/search criterion. 'Blue LED' 210b may indicate that the scanned food product 404a or the medicine may contain traces of the 'restricted' ingredients, based on the consumer defined preferences/search criterion. For example, for a selected and scanned food packet, the device 104a may indicate 'Red LED' 210a, suggesting that the food packet contains food from non-halal animal (e.g. pig), based on a customer's search criteria (religious preference) for a 'Halal' food.

In an embodiment, the device 104a, along with the 'Blue LED' 210b may also indicate the percentage of all the ingredients/contents present in the selected food product 404a, which may be broadcasted to the consumer by audio 214 and/or visual 210 (display or print 204) means.

Further, 'Green LED' 210c may indicate that the scanned food product 404a meets the entire search criterion and therefore is fit for consumption.

Furthermore, 'Orange LED' 210d may indicate that the scanned food product 404a is not listed/found in the data repository 102.

More generally, the customization may comprise emphasizing selectively the absence of a substance derived from a "negative argument". The emphasis may apply to the substance itself, and/or to an identifier thereof, and/or to related information, e.g. a related subject, and/or to a dedicated indicator, e.g. a LED indicator.

In an aspect of the present invention, a plurality of responses may be sent to the data repository 102 by the user based on the received search output.

Examples of the responses may include sending a 'Thank you' message, sending a 'feedback', sending a request for a new search, sending an alert regarding a 'not found/listed' product, and some other types of responses.

The above described responses may further trigger or initiate an action in the data repository 102.

In embodiments, the action may include updating the data repository 102 with the 'not found/listed' product name. This may further include sending an alert to concerned manufacturer and requesting him/her to furnish information regarding the 'not found/listed' product.

In embodiments, the action may involve generating a survey or feedback form.

In other embodiments, the action may involve generating advertisements related to the manufacturer and/or the products.

Consequently, an interaction as described above, wherein apart from the entities 108, the consumers 110 also provide responses and alerts, may result in an end-to-end method and system for providing content information for the products.

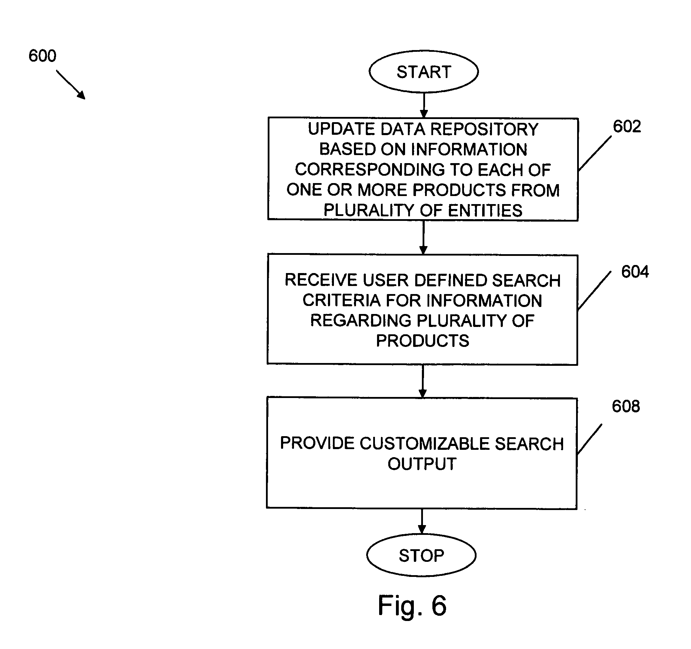

Fig. 6 depicts a flow diagram illustrating the broad steps for providing content-based information for a plurality of products, in accordance with an embodiment of the present invention. The process may begin at step 602, where the data repository 102 may be updated based on the information corresponding to one or more products. This information may be provided by the plurality of entities 108, such as manufacturers 112, distributors 114, shopkeepers 118, third parties 120, and some other types of entities 108.

In an aspect of the present invention, information corresponding to each of the one or more products, received from the entities 108, may be associated with one or more predetermined subjects 312, as described earlier in conjunction with Fig. 3.

At step 604, the user defined search criterion for searching information corresponding to a particular product or products may be received.

In another aspect of the present invention, the received search criterion may also be compared with the information already present in the updated data repository 102. Upon comparison, the search results that match the user defined search criterion may be presented as the customized search output, at step 608.

Various embodiments of the present invention provide a method and system that enables handling an unmanageable amount of information regarding the consumer products.

Various embodiments of the present invention provide a method and system that is convenient for children, the elderly, and specific ethnic groups.

Various embodiments of the present invention provide a method and system that facilitates obtaining real time content information.

Various embodiments of the present invention provide a method and system that reduces the consumers' efforts in generating lists from the various sources on the internet.

Various embodiments of the present invention provide a method and system that embodies an end-to-end interaction among the consumers and the plurality of entities.

The elements depicted in flow charts and block diagrams throughout the figures imply logical boundaries between the elements. However, according to software or hardware engineering practices, the depicted elements and the functions thereof may be implemented as parts of a monolithic software structure, as standalone software modules, or as modules that employ external routines, codes, services, and so forth, or any combination of these, and all such implementations are within the scope of the present disclosure. Thus, while the foregoing drawings and descriptions set forth functional aspects of the disclosed systems, no particular arrangement of software for implementing these functional aspects should be inferred from these descriptions unless explicitly stated or otherwise clear from the context.

Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods or processes described above, and steps thereof, may be realized in hardware, software, or any combination of these suitable for a particular application. The hardware may include a general-purpose computer and/or dedicated computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as computer executable code created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software.

Thus, in one aspect, each method described above and combinations thereof may be embodied in computer executable code that, when executing on one or more computing devices, performs the steps thereof. In another aspect, the methods may be embodied in systems that perform the steps thereof, and may be distributed across devices in a number of ways, or all of the functionality may be integrated into a dedicated, standalone device or other hardware. In another aspect, means for performing the steps associated with the processes described above may include any of the hardware and/or software described above. All such permutations and combinations are intended to fall within the scope of the present disclosure.

While the invention has been disclosed in connection with the preferred embodiments shown and described in detail, various modifications and improvements thereon will become readily apparent to those skilled in the art. Accordingly, the spirit and scope of the present invention is not to be limited by the foregoing examples, but is to be understood in the broadest sense allowable by law.

All documents referenced herein are hereby incorporated by reference.

## Claims

1. A consumer aiding system comprising :
- a data repository host (102) having a first communication interface,
- said data repository host being adapted to maintain and update product-related information, comprising a plurality of product designations and product content identifying data for each product designation,
- said data repository host being further adapted to process search requests to deliver corresponding request results comprising product related information,
- a personal electronic equipment (104) having an input/output user interface, and having a second communication interface adapted for interacting with said first communication interface, said equipment enabling a consumer to establish one or more user defined search requests and to view corresponding customizable requests results comprising product content information for one or more products,
- at least one of the search requests having at least one search argument related to product content identifying data, with the search request tending to the absence of a substance derived from said at least one search argument.

2. The system of claim 1, wherein the personal electronic equipment (104) is adapted to download the data repository, at least in part.

3. The system of claim 1, wherein the personal electronic equipment (104) comprises:
a search input facility for receiving one or more user defined search inputs, and forwarding a corresponding search request; and
a search output facility for presenting a customizable search output form the request results.

4. The system of claim 3, wherein the personal electronic equipment (104) comprises one or more of a scanner, a smart card reader, an RFID tag reader, a keyboard and an audio receptor.

5. The system of claim 3, wherein the personal electronic equipment (104) comprises one or more of : a visual display, a plurality of indicators, such as LED based indicators, an auditory signal, a printing mode.

6. The system of claim 3, wherein the personal electronic equipment (104) comprise a portable communicating device, such as a PDA, a wireless phone, or the like.

7. The system of claim 1, further comprising a user interface, such as a projector.

8. The system of claim 1, further comprising an entity interface, enabling manufacturers to update said product related information (108).

9. The system of claim 1, wherein the data repository further comprises associating the product related information with one or more predetermined subjects identifiers.

10. The system of claim 9, wherein the one or more predetermined subjects identifiers are barcode numbers.

11. The system according to any of the preceding claims, wherein the user defined search criteria comprises a combination of the one or more keywords.

12. The system according to any of the preceding claims, wherein the user defined search criteria comprises a barcode.

13. A consumer aiding method, comprising the steps of :
a. in a data repository (102), maintaining an updated storage of product related information, comprising a plurality of product designations, and a plurality of corresponding content-identifying data, wherein the information is provided by a plurality of entities;
b. receiving a user defined search criteria for information pertaining to the plurality of products; and
c. providing a customizable search output, wherein the customizable search output indicates the content information for the plurality of products.

14. The method of claim 13 further comprising the steps of :
d. sending a plurality of responses to the data repository based on the presented customizable search output, and
e. initiating an action in the data repository pursuant to step d.

15. The method of claim 14, wherein the action is updating the data repository.

16. The method of claim 14, wherein the action is generating a request for a new search input.

17. A computer program product having program instructions stored thereon, configured to execute encoded instructions by a processor, the said instructions providing the steps of:
updating a data repository based on information corresponding to each of one or more products, wherein the information is provided by a plurality of entities;
receiving a user defined search criteria for information pertaining to a plurality of products; and
providing a customizable search output, wherein the customizable search output indicates content information for the plurality of products.

18. The computer program product of claim 17, wherein updating the data repository comprises associating the information corresponding to each of the one or more products with one or more predetermined subjects.
